# EUROPEAN PATENT APPLICATION

(11) **EP 2 700 299 A1**
(43) Date of publication of application: **26.02.2014**
(21) Application number: 12762923.6
(22) Date of filing: 21.03.2012
(51) Int. Cl.: A01G 7/02, A01G 9/18, A01G 9/24, A01G 25/02

(54) **CO2 DIFFUSER**

(30) Priority: 25.03.2011 JP 2011066970
(71) Applicant: Odani, Hajime, Chuo-ku Tokyo 103-0027 (JP); Fujiwara, Keita, Chuo-ku Tokyo 103-0027 (JP)
(72) Inventor: FUJIWARA, Keita, Tokyo 104-0061 (JP); YOSHIDA, Yukitaka, Tokyo 104-0061 (JP); KOHZUMA, Shirou, Tokyo 104-0061 (JP); FUJII, Norio, Tokyo 104-0061 (JP); ISHIHARA, Masayoshi, Tokyo 104-0061 (JP); OOSHIMA, Ken, Tokyo 104-0061 (JP)
(74) Representative: Newstead, Michael John
(86) International application number: PCT/JP2012/057129
(87) International publication number: WO 2012/133026

(57) **Abstract**

In order to provide a CO₂ diffuser with which it is possible to inexpensively and easily apply CO₂ without requiring the use of new piping, the disclosed CO₂ diffuser has a structure wherein a watering pipe (3) is connected through a three-way valve (V) to the downstream ends of a CO₂ supply path (1) and a water supply path (2). CO₂ is applied by diffusing CO₂ from the watering pipe (3), and watering is conducted by spraying water from the watering pipe (3) . It is preferred that switching therebetween should be conducted automatically in accordance with data sent from a CO₂ sensor. Furthermore, it is preferred that the watering pipe (3) should be a commercial porous pipe, and this porous pipe should be supported above the ground and disposed in the vicinity of the stomata present in the backs of leaves of a plant grown in cultivation facilities.

## Description

### TECHNICAL FIELD

The present invention relates to a CO₂ diffuser which diffuses CO₂ required for photosynthesis into closed spaces such as plant factories or horticultural facilities (plastic greenhouses), open-field farms or the like, by utilizing an existing watering pipe.

### BACKGROUND ART

In order to facilitate growing of plants with their carbon dioxide assimilation, the concentration of carbon dioxide inside plant factories or horticultural facilities is kept to be increased. In particular, some mechanisms are employed as follows: liquefied carbon dioxide packed in carbon dioxide cylinders or the like is gasified to be supplied into the facilities; or LPG utilized for air conditioning of the facilities or emission gas containing CO₂ caused by combustion of fossil fuel, e.g. kerosene, of combustors or the like are supplied into the facilities. Accordingly, a big equipment investment has been required due to the necessity of the use of piping to supply CO₂. In addition, when the temperature in the facilities is raised, it has been necessary to stop the combustors and open the roof windows or side windows of the houses, resulting in the insufficient CO₂ application during daytime and during summer, which are at the peak of plant photosynthesis.

In order to solve the problems described above, for example as described in Patent Documents 1 to 3, a method for spraying liquid solution wherein carbon dioxide is dissolved onto plants has been suggested. By spraying the liquid solution wherein carbon dioxide is dissolved, it becomes possible to utilize the conventional watering piping without requiring the use of new piping so that CO₂ can be applied inexpensively and easily.

However, in regard to CO₂ application, the optimal period of time for photosynthesis varies in different plants. Further, according to the aforementioned existing method, i.e. spraying the liquid solution wherein carbon dioxide is dissolved, it is unavoidable to supply water and CO₂ at one time. Accordingly, there has been a problem that it is impossible to apply CO₂ separately corresponding to the respective optimal period of time for respective plants.

### PRIOR ART

### PATENT DOCUMENT

Patent Document 1:
   Japanese Patent Application Laid-Open No. 1996-84530
Patent Document 2:
   Japanese Patent Application Laid-Open No. 1997-215449
Patent Document 3:
   Japanese Patent Application Laid-Open No. 2010-22

### SUMMARY OF THE INVENTION

### TECHNICAL PROBLEMS

There has been a problem that an effective CO₂ supply should be sacrificed by the restriction of equipment investment. The present invention aims at providing equipment which is capable to apply CO₂ inexpensively and easily without requiring the use of new piping.

### SOLUTION TO PROBLEM

In order to solve the problem described above, at the time of CO₂ application on plants grown in cultivation facilities, the present invention produces a following mechanism as its primary feature. That is, the connection of a watering pipe, which is normally connected to a water supply path to conduct watering on the plants, is switchable to a CO₂ supply path so that CO₂ application is conducted by way of the watering pipe.

It is possible to employ a porous pipe as the watering pipe to be supported above the ground and disposed in the vicinity of the stomata present in the backs of leaves of the plants grown in cultivation facilities.

Said cultivation facilities denote facilities wherein plants are grown, including not only closed spaces such as plant factories, horticultural facilities (plastic greenhouses) or the like but also open space such as open-field farms or the like.

### ADVANTAGEOUS EFFECTS OF INVENTION

According to this invention, the connection of the watering pipe which conducts watering on the plants is switchable from the water supply path to the CO₂ supply path so that CO₂ application can be conducted by way of the watering pipe instead of water application. Accordingly, neither the use of new piping nor the use of new sparging apparatus is required so that the existing piping for water spray or the watering pipe can be utilized, resulting in significant cost saving on the operation of CO₂ application.

Specifically, it is preferred that a porous pipe is employed as the watering pipe and is supported above the ground to be disposed in the vicinity of the stomata present in the backs of leaves of the plants so that CO₂ can be applied to the plants efficiently, resulting in further reduction of CO₂ consumption.

### BRIEF DESCRIPTION OF THE DRAWINGS

FIG.1 is a schematic illustration of a CO₂ diffuser of the present invention.
FIG.2 is a perspective illustration of the watering pipe (CO₂ diffusing pipe).
FIG.3 is a diagram wherein the watering pipe is supported by a brace projecting above the ground.
FIG.4 is a diagram wherein the watering pipe is suspended by a suspension.

### DETAILED DESCRIPTION OF THE INVENTION

Hereinafter, embodiments of this invention will be concretely described.

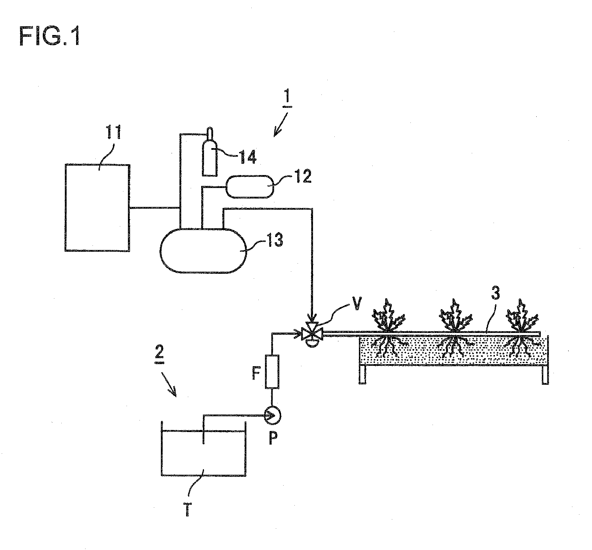

FIG.1 is a schematic illustration of a CO₂ diffuser when carrying out the present invention.

The CO₂ diffuser has a structure wherein the watering pipe 3 is connected through a three-way valve V to the downstream ends of the CO₂ supply path 1 and the water supply path 2. At the time of CO₂ application, CO₂ is applied by diffusing CO₂ from the watering pipe 3, and at the time of water application, watering is conducted by spraying water from the watering pipe 3. Herein, a commercialized product may be utilized as the three-way valve V so that the reliability of the equipment can be enhanced and the cost of manufacturing can be reduced concurrently.

Within the CO₂ supply path 1, gas emissions emitted by a CO₂ emission source 11 such as a boiler, an electric power plant, an industrial plant or the like is compressed by a compressor 12 to be temporarily stored in a storage container 13, and the watering pipe 3 is connected through the three-way valve V to the end of the storage container 13. When CO₂ stored in the storage container 13 runs short, CO₂ is replenished from a CO₂ cylinder 14 containing liquefied carbon dioxide so as not to be out of gas. It is possible to directly supply CO₂ from the CO₂ emission source 11 or the CO₂ cylinder 14 to the watering pipe 3 through the three-way valve V, without temporarily storing CO₂ in the storage container 13.

Within the water supply path 2, water stored in a feed tank T is pumped by a pump P, and then microparticles within the water are removed by a filter F. The watering pipe 3 is connected through the three-way valve V to the end of the filter F.

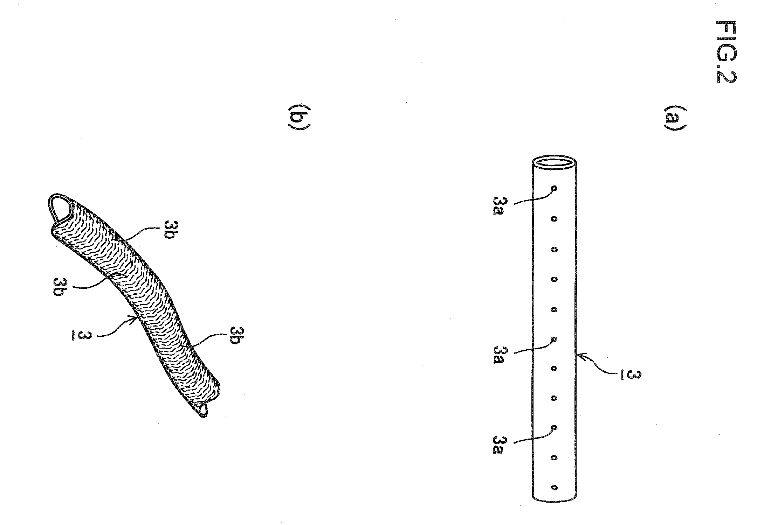

A commercialized product for the use of watering is employed as the watering pipe 3. For example, as shown in FIG.2 (a), a pipe having pores 3a for spraying water on its three sides may be employed. Alternatively, as shown in FIG.2(b), a commercial porous pipe may be employed. This porous pipe is a pipe for the use of watering having a number of microscopic pores 3b at the same distribution density on its complete periphery. These sorts of watering pipe 3 are laid on planting beds or nursery soil directly and the soil is moistened by water leached from the pores.

The porous pipe has the advantage that it is capable to spray water with a small quantity of water at low-hydrostatic pressure. In addition, compared to the pipe having pores on its sides, it is capable to diffuse CO₂ evenly from roots of the plants to a distance.

Furthermore, upon occurrence of clogging of pores of the watering pipe 3 due to particles included in water, the combination use of water and CO₂ enables cleansing of the internal wall of the pipe since the gas flow including CO₂ achieves the removal of precipitating particles adhered to the same.

In addition to the structure described above, the CO₂ diffuser of the present invention is further equipped with a control means which provides a mechanism as follows: when it comes to a predetermined period of time for CO₂ application or decrease of CO₂ concentration is detected by a CO₂ sensor, one of the valves of the three-way valve V in the direction of the water supply path 2 is closed and the other one in the direction of the CO₂ supply path 1 is opened; accordingly gas emissions including CO₂ stored in the storage container 13 are sent to the watering pipe 3; and eventually, CO₂ is applied upwardly from the watering pipe 3 laid on the planting beds. In this way, it becomes possible to effectively apply CO₂ to backs of leaves of the plants which are the areas for absorption of CO₂. In addition, as it is capable of applying CO₂ in only close vicinity of the plants, only a small amount of CO₂ is required so that CO₂ consumption can be reduced. At the time of water application, the three-way valve V is operated so that the valve in the direction of the CO₂ supply path 1 is closed and the valve in the direction of the water supply path 2 is opened. Accordingly, water stored in the feed tank T is sent to the watering pipe 3, resulting in a water spray from the watering pipe 3.

When there is a blank area wherein no plants are grown such as a work passage in the cultivation area, the watering pipe 3 is placed only on the cultivation area by passing over the blank area with a common hose pipe made of vinyl, rubber or the like. By connecting them in series to supply water or CO₂, it becomes possible to avoid unnecessary application onto the blank area wherein no plants are grown so that water/CO₂ can be applied only on the cultivation area efficiently.

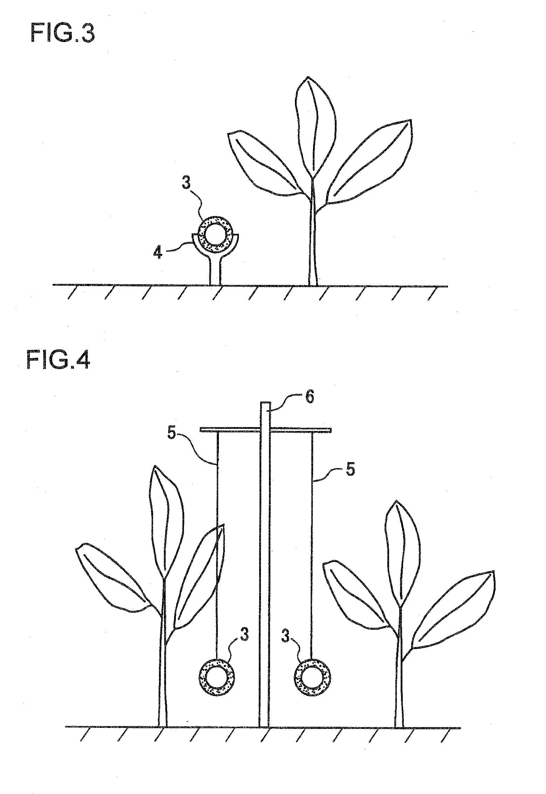

In addition to the embodiment wherein the watering pipe 3 is laid on the ground, it is possible to employ a porous pipe supported from about a few centimeters to about a dozen centimeters above the planting beds or nursery soil, and disposed in the vicinity of the stomata present in the backs of leaves of the plants. For example, it is possible to place a plurality of braces 4 as shown in FIG.3 at certain intervals so as to support the porous pipe 3 on them. Alternatively, it is also possible to place a plurality of suspensions 5 fixed on a pole brace 6 or the like as shown in FIG.4 at certain intervals so as to suspend the porous pipe 3 from them.

These embodiments enable efficient supply of CO₂ onto the plants, resulting in the reduction of CO₂ consumption.

### EXPLANATION OF SYMBOLS

- 1: CO₂ supply path
- 11: CO₂ emission source
- 12: Compressor
- 13: Storage container
- 14: CO₂ cylinder
- 2: Water supply path
- 3: Watering pipe
- F: Filter
- P: Pump
- T: Feed tank
- V: Three-way valve

## Claims

1. A CO₂ diffuser which applies CO₂ onto plants grown in cultivation facilities, having a feature that the connection of a watering pipe for water application on said plants is switchable from a water supply path to a CO₂ supply path so that CO₂ is applied from the watering pipe.

2. The CO₂ diffuser according to claim 1 comprising a three-way valve utilized for the connection-switching of the watering pipe.

3. The CO₂ diffuser according to claim 1 wherein the watering pipe is a porous pipe.

4. The CO₂ diffuser according to claim 3 wherein the porous pipe is supported above the ground and disposed in the vicinity of the stomata present in backs of leaves of the plants.

5. The CO₂ diffuser according to claim 2 further comprising a control means which controls opening/closing of the three-way valve and a CO₂ sensor installed in the cultivation facility, and when CO₂ concentration in the cultivation facility becomes below the predetermined level, said control means controls the three-way valve so that the destination of the watering pipe is switched to the CO₂ supply path.
